# EUROPEAN PATENT APPLICATION

(11) **EP 4 598 089 A1**
(43) Date of publication of application: **06.08.2025**
(21) Application number: 22959877.6
(22) Date of filing: 27.09.2022
(51) Int. Cl.: H04W 24/00, H04W 72/04

(54) **INTERFERENCE FREQUENCY INFORMATION REPORTING METHOD AND APPARATUS**

(71) Applicant: Beijing Xiaomi Mobile Software Co., Ltd., Beijing 100085 (CN)
(72) Inventor: WU, Yumin, Beijing 100085 (CN)
(74) Representative: Hersina, Günter
(86) International application number: PCT/CN2022/121915
(87) International publication number: WO 2024/065228

(57) **Abstract**

Discloses in the present application are an interference frequency information reporting method and apparatus, which may be applied to a communication system. The method comprises: reporting interference frequency information to a network device according to a specified frequency information type. In the present application, interference frequency information is reported to a network device according to a specified frequency information type, such that frequency information types used by a terminal device and the network device to report the interference frequency information can be kept consistent. Since a finer granularity of a frequency information type may correspondingly result in more signaling loss, in order to take both signaling loss and the fineness of frequency interference control into consideration, different frequency information types can be indicated to a terminal device for the reporting of interference frequency information under different requirements for interference control, thereby achieving a compromise between signaling loss and fine interference control.

## Description

### TECHNICAL FIELD

The disclosure relates to the field of communication technologies, and in particular, to a method and apparatus for reporting interference frequency information.

### BACKGROUND

The same terminal may be equipped with multiple different radio transceivers, such as Long Term Evolution (LTE), New Radio (NR), Wireless Fidelity (WiFi), Bluetooth, Global Navigation Satellite System (GNSS), etc. At adjacent frequencies or harmonic frequencies, the receiver of the terminal may be affected by interference from the transmitter. The terminal can report the interference frequency information to the network device in order to eliminate the interference.

### SUMMARY

Embodiments of the present disclosure provide a method and apparatus for reporting interference frequency information, which ensures that a terminal and a network device can maintain consistency in the frequency information type used for reporting interference frequency information by specifying the frequency information type.

In a first aspect, embodiments of the present disclosure provide a method for reporting interference frequency information. The method includes:

reporting interference frequency information to a network device according to a specified frequency information type.

In embodiments of the present disclosure, by reporting the interference frequency information to the network device according to the specified frequency information type, the terminal and the network device can maintain consistency in the frequency information type used for reporting interference frequency information. Due to the fact that the finer granularity of frequency information, the more signaling loss, in order to balance the signaling loss and the precision of frequency interference control, under different interference control requirements, different frequency information types can be indicated to the terminal for reporting the interference frequency information, achieving a compromise between signaling loss and precise interference control.

In a second aspect, embodiments of the present disclosure provide another method for reporting interference frequency information. The method includes:

receiving interference frequency information reported by a terminal according to a specified frequency information type.

In embodiments of the present disclosure, by specifying the frequency information type for reporting the interference frequency information to the network device, the terminal and the network device can maintain consistency in the frequency information type used for reporting interference frequency information. Due to the fact that the finer granularity of frequency information, the more signaling loss, in order to balance the signaling loss and the precision of frequency interference control, under different interference control requirements, different frequency information types can be indicated to the terminal to report interference frequency information, achieving a compromise between signaling loss and precise interference control.

In a third aspect, embodiments of the present disclosure provide a communication device. The communication device has some or all of the functions of the terminal in implementing the method described in the first aspect. For example, the communication device may have the functions in some or all of embodiments of the present disclosure, or may have the function of independently implementing any of the embodiments in this disclosure. The functions can be implemented through hardware or by executing corresponding software through hardware. The hardware or software includes one or more units or modules corresponding to the above functions.

In an implementation, the structure of the communication device may include a transceiver module and a processing module. The processing module is configured to support the communication device to perform the corresponding functions in the above method. The transceiver module is configured to support communication between the communication device and other devices. The communication device may also include a storage module coupled with the transceiver module and the processing module, for storing necessary computer programs and data for the communication device.

In a fourth aspect, embodiments of the present disclosure provide another communication device. The communication device has some or all of the functions of the network device in implementing the method described in the second aspect. For example, the communication device may have the functions in some or all embodiments of the present disclosure, or may have the function of independently implementing any of the embodiments in this disclosure. The functions can be implemented through hardware or by executing corresponding software through hardware. The hardware or software includes one or more units or modules corresponding to the above functions.

In an implementation, the structure of the communication device may include a transceiver module and a processing module. The processing module is configured to support the communication device to perform the corresponding functions in the above method. The transceiver module is configured to support communication between the communication device and other devices. The communication device may also include a storage module coupled with the transceiver module and the processing module, for storing necessary computer programs and data for the communication device.

In a fifth aspect, embodiments of the present disclosure provide a communication device. The communication device includes a processor that executes the method described in the first aspect when the processor calls a computer program stored in a memory.

In a sixth aspect, embodiments of the present disclosure provide a communication device. The communication device includes a processor that executes the method described in the second aspect when the processor calls a computer program stored in a memory.

In a seventh aspect, embodiments of the present disclosure provide a communication device. The communication device includes a processor and a memory, wherein the memory stores a computer program; the processor is configured to execute the computer program stored in the memory to enable the communication device to perform the method described in the first aspect above.

In an eighth aspect, embodiments of the present disclosure provide a communication device. The communication device includes a processor and a memory, wherein the memory stores a computer program; the processor is configured to execute the computer program stored in the memory to enable the communication device to perform the method described in the second aspect above.

In a nineth aspect, embodiments of the present disclosure provide a communication device. The device includes a processor and an interface circuit, wherein the interface circuit is configured to receive code instructions and transmit them to the processor, and the processor is configured to run the code instructions to cause the device to perform the method described in the first aspect above.

In a tenth aspect, embodiments of the present disclosure provide a communication device. The device includes a processor and an interface circuit, wherein the interface circuit is configured to receive code instructions and transmit them to the processor, and the processor is configured to run the code instructions to cause the device to perform the method described in the second aspect above.

In an eleventh aspect, embodiments of the present disclosure provide a communication system. The system includes a communication device as described in the third aspect, and a communication device as described in the fourth aspect. Alternatively, the system includes a communication device as described in the fifth aspect, and a communication device as described in the sixth aspect. Alternatively, the system includes a communication device as described in the seventh aspect, and a communication device as described in the eighth aspect. Alternatively, the system includes a communication device as described in the nineth aspect, and a communication device as described in the tenth aspect.

In a twelfth aspect, embodiments of the present disclosure provide a computer readable storage medium, configured to store instructions used for the terminal described above, which when executed, cause the terminal to implement the method described in the first aspect above.

In a thirteenth aspect, embodiments of the present disclosure provide a readable storage medium, configured to store instructions used for the network device described above, which when executed, cause the network device to implement the method described in the second aspect above.

In a fourteenth aspect, embodiments of the present disclosure provide a computer program product including a computer program that, when run on a computer, causes the computer to perform the method described in the first aspect.

In a fifteenth aspect, embodiments of the present disclosure provide a computer program product including a computer program that, when run on a computer, causes the computer to perform the method described in the second aspect.

In a sixteenth aspect, embodiments of the present disclosure provide a chip system. The chip system includes at least one processor and interface for supporting the terminal to implement the functions involved in the first aspect, such as determining or processing at least one of data and information involved in the above methods. In a possible design, the chip system further includes a memory for storing necessary computer programs and data for the terminal. This chip system can be composed of chips or include chips and other discrete components.

In a seventeenth aspect, embodiments of the present disclosure provide a chip system. The chip system includes at least one processor and interface for supporting the network device to implement the functions involved in the second aspect, such as determining or processing at least one of data and information involved in the above methods. In a possible design, the chip system further includes a memory for storing necessary computer programs and data for the terminal. This chip system can be composed of chips or include chips and other discrete components.

In an eighteenth aspect, embodiments of the present disclosure provide a computer program that, when executed on a computer, causes the computer to perform the method described in the first aspect.

In a nineteenth aspect, embodiments of the present disclosure provide a computer program that, when executed on a computer, causes the computer to perform the method described in the second aspect.

### BRIEF DESCRIPTION OF THE DRAWINGS

In order to provide a clearer explanation of the technical solution in embodiments of the present disclosure or background technology, the accompanying drawings required for use in embodiments of the present disclosure or background technology will be described below.
Fig. 1 is a schematic diagram of an architecture of a communication device provided in an embodiment of the present disclosure.
Fig. 2 is a schematic flowchart of a method for reporting interference frequency information provided in an embodiment of the present disclosure.
Fig. 3 is a schematic flowchart of another method for reporting interference frequency information provided in an embodiment of the present disclosure.
Fig. 4 is a schematic flowchart of another method for reporting interference frequency information provided in an embodiment of the present disclosure.
Fig. 5 is a schematic flowchart of another method for reporting interference frequency information provided in an embodiment of the present disclosure.
Fig. 6 is a schematic flowchart of another method for reporting interference frequency information provided in an embodiment of the present disclosure.
Fig. 7 is a block diagram of a communication device provided in an embodiment of the present disclosure.
Fig. 8 is a block diagram of a communication device provided in an embodiment of the present disclosure.
Fig. 9 is a block diagram of a chip provided in an embodiment of the present disclosure.

### DETAILED DESCRIPTION

The exemplary embodiments will be described in detail here, with examples shown in the accompanying drawings. When referring to the accompanying drawings, unless otherwise indicated, the same numbers in different drawings represent the same or similar elements. The implementations described in the following exemplary embodiments do not represent all implementations consistent with the embodiments of the present disclosure. On the contrary, they are only examples of devices and methods consistent with some aspects of the embodiments of the present disclosure as described in the accompanying claims.

The terms used in embodiments of the present disclosure are only for the purpose of describing specific embodiments and are not intended to limit the embodiments of the present disclosure. The singular forms of "a" and "the" used in this disclosure and the accompanying claims are also intended to include the majority form, unless the context clearly indicates otherwise. It should also be understood that the term "and/or" used in this article refers to and includes any or all possible combinations of one or more associated listed items.

It should be understood that although various information may be described using terms such as first, second, third, etc. in this disclosure, such information should not be limited to these terms. These terms are only used to distinguish information for the same type from each other. For example, without departing from the scope of this disclosure, the first information can also be referred to as the second information, and similarly, the second information can also be referred to as the first information. Depending on the context, the word "if" used here can be interpreted as "when......" or "in case that......" or "in response to determining ......".

In order to better understand a method for reporting interference frequency information in embodiments of the disclosure, a communication system to which embodiments of the disclosure are applicable is described below.

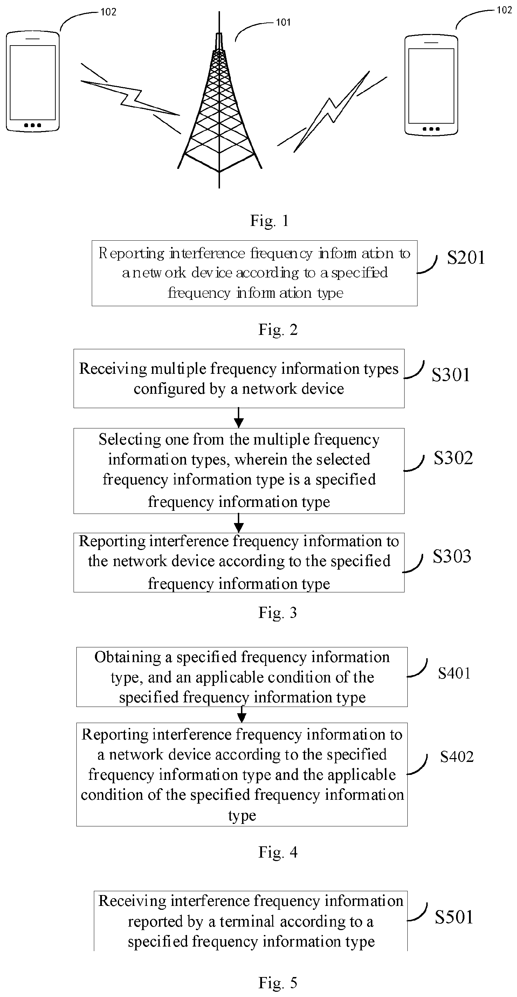

FIG. 1 is a diagram illustrating an architecture of a communication system provided in an embodiment of the disclosure. The communication system may include, but is not limited to, one network device and one terminal. A number and a form of the devices shown in FIG. 1 are only for example and do not constitute a limitation to embodiments of the disclosure, and two or more network devices and two or more terminals may be included in practical applications. The communication system as illustrated in FIG. 1 includes one network device 101 and one terminal 102 for example.

It should be noted that technical solutions in embodiments of the disclosure are applicable to various communication systems, for example, a 3rd Generation (3G) Universal Mobile Telecommunications System (UMTS), a long term evolution (LTE) system, a 5th generation (5G) mobile communication system, a 5G new radio (NR) system, a 6^{th} generation (6G) mobile communication system, or other future new mobile communication systems. It should also be noted that the sidelink in the embodiments of the present disclosure can also be referred to as a lateral link or a direct link.

The network device 101 in embodiments of the disclosure may include an entity for transmitting or receiving a signal at a network side. For example, the network device 101 may be an evolved NodeB (eNB), a transmission reception point (TRP), a next generation NodeB (gNB) in a NR system, a base station in other future mobile communication systems, or an access node in a wireless fidelity (WiFi) system. A specific technology and a specific device form adopted by the network device are not limited in embodiments of the disclosure. The network device according to embodiments of the disclosure may consist of a central unit (CU) and a distributed unit (DU). The CU may also be referred to as a control unit. The protocol layers of a network device such as a base station may be split by using a structure of the CU-DU, so that the functions for a part of the protocol layers are placed in the CU for centralized control, and functions of a remaining part or all of the protocol layers are distributed in the DU, and the DU is centrally controlled by the CU.

The terminal 102 in embodiments of the disclosure is an entity for receiving or transmitting a signal at a user side, for example, a mobile phone. The terminal may be referred to as a terminal device, a user equipment (UE), a mobile station (MS), a mobile terminal (MT), etc. The terminal may be an automobile with a communication function, a smart automobile, a mobile phone, a wearable device, a tablet computer (Pad), a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in a smart home, etc. A specific technology adopted by the terminal and a specific device form adopted by the terminal are not limited in embodiments of the disclosure.

It can be understood that the communication system described in the embodiments of the present disclosure is for a clearer explanation of the technical solution provided in the embodiments of the present disclosure, and does not constitute a limitation on the technical solution provided in the embodiments of the present disclosure. Those skilled in the art know that with the evolution of system architecture and the emergence of new business scenarios, the technical solution provided in the embodiments of the present disclosure is also applicable to similar technical problems.

It should be noted that the method for reporting interference frequency information provided in any embodiment of the present disclosure can be executed separately, or combined with possible implementations in other embodiments, or combined with any technical solution in related technologies.

The following provides a detailed introduction to the method and apparatus for reporting interference frequency information provided in this disclosure, in conjunction with the accompanying drawings.

Please refer to Fig. 2, which is a schematic flowchart of a method for reporting interference frequency information provided in an embodiment of the present disclosure. The method for reporting interference frequency information is performed by a terminal, and the method includes but is not limited to the following steps.

S201, interference frequency information is reported to a network device according to a specified frequency information type.

In an embodiment of the present disclosure, the specified frequency information type includes at least one of: a frequency point and a bandwidth; a starting frequency point and an ending frequency point; BWP (bandwidth part) information; resource block information; or a measurement object.

It should be noted that the specified frequency information type may include one or more of the above frequency information types. For example, the specified frequency information type may be a combination of BWP information and resource block information.

In an embodiment, the interference frequency information may include frequency information of interfered frequency; in another embodiment, the interference frequency information may include frequency information of interfering frequency; in yet another embodiment, the interference frequency information may include frequency information of the interfered frequency and the interfering frequency.

The frequency information may correspond to multiple frequency information types, and different frequency information types correspond to different granularities, which can characterize the degree of refinement of frequency information. In order to enable the network device to more accurately perform interference control at specific frequencies, the terminal device may use frequency information types of different granularities when reporting the interference frequency information. How to ensure that terminal device and the network device have a consistent understanding of the frequency information type used to report the interference frequency information is the problem that needs to be solved in the embodiments of this disclosure.

In an embodiment, the terminal may determine the specified frequency information type based on network configuration or network indication. In some implementations, the terminal can receive configuration information or indication information sent by the network device, which is used to indicate the specified frequency information type. For example, the configuration information or indication information is used to indicate the identification information of the specified frequency information type. The terminal can report the interference frequency information to the network device using the specified frequency information type based on the identification information. For example, different frequency information types can correspond to different indices, and the index of the frequency information type can be used as the identification information of the frequency information type. The configuration information or indication information is used to indicate an index of a frequency information type, and the terminal device can determine the specified frequency information type based on the configured or indicated index.

In an embodiment of the present disclosure, the specified frequency information type includes at least one of: a frequency point and a bandwidth; a starting frequency point and an ending frequency point; BWP (bandwidth part) information; resource block information; or a measurement object. It should be noted that the specified frequency information type may include one or more of the above frequency information types. For example, the specified frequency information type may be a combination of BWP information and resource block information.

In an embodiment, in a case where the specified frequency information type is the frequency point, the reported interference frequency information may include at least one of a center frequency point or a starting frequency point.

In an embodiment, in a case where the specified frequency information type is the bandwidth, the reported interference frequency information may include at least one of a frequency bandwidth identifier, a BWP identifier, a cell identifier or a cell group identifier.

As an example, the frequency bandwidth identifier may be 20MHz, and the BWP identifier may be BWP number A; the cell identifier may be cell identifier 1; and the cell group identifier may identify either the Master Cell Group (MCG) or the Secondary Cell Group (SCG).

In an embodiment, in a case where the specified frequency information type includes the starting frequency point and the ending frequency point, the reported interference frequency information may include the starting frequency point and the ending frequency point. The starting frequency point and the ending frequency point may be Absolute Radio Frequency Channel Numbers (ARFCN ValueNR). That is to say, the starting frequency point can be represented by the absolute radio frequency channel number *i*, and the ending frequency point can be represented by the absolute radio frequency channel number *j*.

In an embodiment, in a case where the specified frequency information type is BWP information, the reported interference frequency information may include any one of all configured BWP information and specified BWP information. The specified BWP information includes at least one of a BWP identifier, a cell identifier, or a cell group identifier.

In an embodiment, in a case where the specified frequency information type is resource block information, the reported interference frequency information may include at least one of numbers of resource blocks or of resource block groups, a number of a starting resource block or of a starting resource block group, and a numeric count of resource blocks or resource block groups. Multiple resource blocks can form a resource block group.

The resource block can be a Physical Resource Block (PRB) or a PRB group, where the numeric count of PRBs may be 2, wherein 1 PRB includes 12 subcarriers, and 1 subcarrier may be of multiple different bandwidths. Different bandwidths can be indicated by parameter set identifiers, such as subcarrier spacing. Different bandwidths can include, for example, 15kHz, 30kH, and 60kHz.

It can be understood that in the case where the specified frequency information type is the center frequency, the reported interference frequency information may include the center frequency of the interfering frequency and/or of the interfered frequency. In the case where the specified frequency information type is BWP information, the reported interference frequency information may include the BWP identifier of the BWP where the interfering frequency and/or the interfered frequency is located. In the case where the specified frequency information type is the cell identifier, the reported interference frequency information may include the cell identifier of the cell to which the interfering frequency and/or the interfered frequency belongs. In the case where the specified frequency information type is resource block information, the reported interference frequency information may include the number of the resource block or resource block group corresponding to the interfering frequency and/or the interfered frequency. In an embodiment, the numeric count of resource blocks corresponding to the interfering frequency and/or the interfered frequency can also be reported. In the case where the specified frequency information type is the measurement object, the reported interference frequency information may include the measurement object identifier of the measurement object corresponding to the interfering frequency and/or the interfered frequency.

In an embodiment, the reported interference frequency information may be a list of interference frequency information that the terminal is allowed to report, such as a list of center frequency points, a list of starting frequency points, a list of BWP information, a list of resource block information, or a list of measurement object identifiers.

In an embodiment, the interference frequency information mentioned above can be included in the interference assistance information of the terminal. That is to say, the terminal can report the interference frequency information to the network device through the interference assistance information.

In an embodiment, the terminal can determine the specified frequency information type according to a protocol agreement.

The interference frequency information may include: one or more frequencies affected by interference. For example, the reported frequency includes frequency f1, which is interfered by other frequencies. For another example, the reported frequency includes frequency f2, which interferes with other frequencies. For yet another example, the reported frequencies include frequency f1 and frequency f2, where frequency f1 is interfered by other frequencies (such as frequency f2, frequency f3), and frequency f2 interferes with other frequencies (such as frequency f1).

The interference frequency information may include one or more frequency combinations affected by interference.

For example, in the reported frequency combination 1, cross modulation of multiple frequencies (such as frequency f1 and frequency f2) will interfere with other wireless frequencies (such as frequency f3).

In an embodiment, the interference frequency information includes victim frequency information and/or attacker frequency information. The victim frequency information refers to the frequency interfered by other frequencies, while the attacker frequency information refers to the frequency that interferes with or affects other frequencies.

For example, the reported interference frequency information includes frequency f1 and frequency f2; wherein, frequency f2 interferes with frequency f1. For another example, the reported interference frequency information includes frequency f3 and frequency f4, wherein frequency f3 is interfered by frequency f5 and frequency f4 interferes with frequency f6.

In embodiments of the present disclosure, by reporting the interference frequency information to the network device according to the specified frequency information type, the terminal and the network device can maintain consistency in the frequency information type used for reporting interference frequency information. Due to the fact that the finer granularity of frequency information, the more signaling loss, in order to balance the signaling loss and the precision of frequency interference control, under different interference control requirements, different frequency information types can be indicated to the terminal for reporting the interference frequency information, achieving a compromise between signaling loss and precise interference control.

Please refer to Fig. 3, which is a schematic flowchart of a method for reporting interference frequency information provided in an embodiment of the present disclosure. The method for reporting interference frequency information is performed by a terminal. The method includes but is not limited to the following steps.

S301, multiple frequency information types configured by a network device are received.

The network device can configure multiple frequency information types for the terminal. For example, the terminal can receive multiple frequency information types configured by the network device through Radio Resource Control (RRC).

S302, a frequency information type is selected from the multiple frequency information types configured, wherein the selected frequency information type is a specified frequency information type.

In an embodiment, the terminal may determine a specified frequency information type from multiple frequency information types configured based on network configuration or network indication.

In another embodiment, the terminal may determine a specified frequency information type from multiple configured frequency information types according to a protocol agreement.

For a specific introduction to the frequency information type, please refer to the relevant content recorded in the above embodiments, which will not be repeated here.

S303, interference frequency information is reported to the network device according to the specified frequency information type.

For a specific introduction of step S303, please refer to the relevant content recorded in the above embodiments, such as step S201, which will not be repeated here.

In embodiments of the present disclosure, by reporting the interference frequency information to the network device according to the specified frequency information type, the terminal and the network device can maintain consistency in the frequency information type used for reporting interference frequency information. Due to the fact that the finer granularity of frequency information, the more signaling loss, in order to balance the signaling loss and the precision of frequency interference control, under different interference control requirements, different frequency information types can be indicated to the terminal for reporting the interference frequency information, achieving a compromise between signaling loss and precise interference control.

Please refer to Fig. 4, which is a schematic flowchart of a method for reporting interference frequency information provide in an embodiment of the present disclosure. The method for reporting interference frequency information is performed by a terminal. The method includes but is not limited to the following steps.

S401, a specified frequency information type and an applicable condition of the specified frequency information type are obtained.

In an embodiment, the terminal may determine the specified frequency information type and/or the applicable condition of the specified frequency information type based on network configuration or network indication; in another embodiment, the terminal device may determine the specified frequency information type and/or the applicable condition of the specified frequency information type according to the protocol agreement.

In some implementations, the terminal can determine the specified frequency information type through network or protocol agreement. Furthermore, based on the correspondence between the frequency information type and the applicable condition of the frequency information type, the applicable condition of the specified frequency information type is determined.

In an embodiment, the frequency information type includes at least one of: a frequency point and a bandwidth, a starting frequency point and an ending frequency point, bandwidth pat (BWP) information, resource block information, or a measurement object. The specified frequency information type can be one or more of the above frequency information types.

For a specific introduction to the frequency information type, please refer to the relevant content recorded in the above embodiments, which will not be repeated here.

In an embodiment, the applicable condition of the specified frequency information type includes at least one of:
an applicable radio access technology type;
an applicable frequency point;
an applicable frequency point type;
an applicable cell;
an applicable cell group;
an applicable BWP;
an applicable physical resource block; or
an applicable frequency interference type.

The applicable radio access technology type may include at least one of third-generation Universal Mobile Telecommunications System (UMTS), fourth-generation Long Term Evolution (LTE) communication system, fifth-generation New Radio (NR), and sixth-generation radio access technology.

The applicable frequency point type may include at least one of a service frequency point or a non-service frequency point. The service frequency point may be a frequency point configured for serving a cell, while the non-service frequency point may be a frequency point that is not configured for serving a cell.

The applicable frequency interference type includes at least one of an uplink carrier aggregation frequency combination or a single carrier interference frequency.

For example, the uplink carrier aggregation frequency combination includes two uplink transmission frequencies f1 and f2, where the cross modulation of f1 and f2 interferes with the other wireless frequency f3. This uplink carrier aggregation frequency combination can be reported as the interference frequency information to the network device. It can be understood that the interference frequency information can include attacker frequencies f1 and f2, as well as victim frequency f3.

For example, a single carrier interference frequency such as the interfered frequency f1 or the interfering frequency f2 can be reported to the network device as the interference frequency information.

That is to say, the terminal can report an uplink carrier aggregation frequency combination to the network device based on the specified frequency information type, or report a single carrier interference frequency to the network device based on the specified frequency information type.

S402, the interference frequency information is reported to the network device according to the specified frequency information type and the applicable condition of the specified frequency information type.

As the applicable conditions for different frequency information types can also vary, after determining the specified frequency information type and the applicable condition for the specified frequency information type, the interference frequency information that can be reported to the network device is determined and reported to the network device. That is to say, by specifying the frequency information type, the interference frequency information reported to the network device needs to be within the applicable condition of the specified frequency information type.

For example, if the specified frequency information type is the measurement object and the applicable condition for this specified frequency information type is the radio access frequency point of LTE, the terminal can report the interfered LTE frequency point to the network device through the measurement object identification. It can be understood that the interfered frequency point is not the radio access frequency point of LTE, and the terminal cannot report the interfered LTE frequency point to the network device through the specified frequency information type, that is, the measurement object identification.

For another example, if the specified frequency information type is BWP information and the applicable condition for this specified frequency information type is the service frequency point of NR, the terminal can determine that the frequency point information that can be reported as interfered needs to meet the NR frequency point configured to serve the cell. Furthermore, the terminal can report to the network device the interfered NR frequency point information configured to the serve the cell through BWP information.

For another example, if the applicable condition for the specified frequency information type is the 100MHz bandwidth corresponding to frequency point-1, then the interference frequency information reported by the terminal needs to be within the 100MHz bandwidth corresponding to frequency point-1.

In an embodiment, based on the specified frequency information type, part or all of the interference frequency information that meets the applicable conditions of the specified frequency information type is reported to the network device. That is to say, the terminal can filter all interference frequency information according to the applicable condition of the specified frequency information type, to obtain interference frequency information that meets the applicable condition, and report part or all of the interference frequency information that meets the applicable condition based on the specified frequency information type.

In embodiments of the present disclosure, by reporting the interference frequency information to the network device according to the specified frequency information type, the terminal and the network device can maintain consistency in the frequency information type used for reporting interference frequency information. Due to the fact that the finer granularity of frequency information, the more signaling loss, in order to balance the signaling loss and the precision of frequency interference control, under different interference control requirements, different frequency information types can be indicated to the terminal for reporting the interference frequency information, achieving a compromise between signaling loss and precise interference control. Further, by setting the applicable condition for the specified frequency information type, the accuracy of the reported interference frequency information can be ensured, and the reported amount of irrelevant frequency information can be excluded.

Please refer to Fig. 5, which is a schematic flowchart of a method for reporting interference frequency information provided in an embodiment of the present disclosure. The method for reporting interference frequency information is performed by a network device, and the method includes but is not limited to the following steps.

S501, interference frequency information reported by a terminal according to a specified frequency information type is received.

In an embodiment, the specified frequency information type includes at least one of: a frequency point and a bandwidth; a starting frequency point and an ending frequency point; BWP (bandwidth part) information; resource block information; or a measurement object. For a specific introduction to the frequency information type, please refer to the relevant content recorded in the above embodiments, which will not be repeated here.

It should be noted that the specified frequency information type may include one or more of the above frequency information types.

In an embodiment, the interference frequency information may include frequency information of interfered frequency; in another embodiment, the interference frequency information may include frequency information of interfering frequency; in yet another embodiment, the interference frequency information may include frequency information of the interfered frequency and the interfering frequency.

In an embodiment, the specified frequency information type may be determined by the terminal based on network indication or network configuration, or may be determined by the terminal according to a protocol agreement.

In some implementations, the network device can send configuration information or indication information to the terminal. The configuration information or indication information may carry identification information of the specified frequency information type. The frequency information type used for reporting the interference frequency information to the network device can be determined according to the identification information. For example, different frequency information types can correspond to different indices, and the index of the frequency information type can be used as the identification information of the frequency information type. The network device can configure or indicate an index of a frequency information type to the terminal, and accordingly, the terminal can determine the specified frequency information type based on the configured or indicated index.

The interference frequency information may include one or more frequencies affected by interference.

The interference frequency information may include one or more frequency combinations affected by interference.

In an embodiment, the interference frequency information may include victim frequency information or attacker frequency information. The victim frequency information refers to the frequency interfered by other frequencies, while the attacker frequency information refers to the frequency that interferes with or affects other frequencies.

It can be understood that in the case where the specified frequency information type is the center frequency, the interference frequency information received by the network device may include the center frequency of the interfering frequency and/or the interfered frequency. In the case where the specified frequency information type is BWP information, the interference frequency information received by the network device may include the BWP identifier of the BWP where the interfering frequency and/or the interfered frequency is located. In the case where the designated frequency information type is a cell identifier, the interference frequency information received by the network device may include the cell identifier of the cell to which the interfering frequency and/or the interfered frequency belongs. In the case where the specified frequency information type is resource block information, the interference frequency information received by the network device may include the number of the resource block or resource block group corresponding to the interfering frequency and/or the interfered frequency. In an embodiment, the numeric count of resource blocks corresponding to the interfering frequency and/or the interfered frequency can also be received. In the case where the specified frequency information type is the measurement object, the interference frequency information received by the network device may include the measurement object identifier of the measurement object corresponding to the interfering frequency and/or the interfered frequency.

In an embodiment, the reported interference frequency information may be a list of interference frequency information that the terminal is allowed to report, such as a list of center frequency points, a list of starting frequency points, a list of BWP information, a list of resource block information, or a list of measurement object identifiers.

In an embodiment, the network device may receive part or all of the interference frequency information within the applicable condition of the specified frequency information type reported by the terminal to the network device based on the specified frequency information type.

In embodiments of the present disclosure, the network device can receive the interference frequency information reported by the terminal through the specified frequency information type, which can enable the terminal and the network device to maintain consistency in the frequency information type used for reporting the interference frequency information. Due to the fact that the finer granularity of frequency information, the more signaling loss, in order to balance the signaling loss and the precision of frequency interference control, under different interference control requirements, different frequency information types can be indicated to the terminal for reporting the interference frequency information, achieving a compromise between signaling loss and precise interference control.

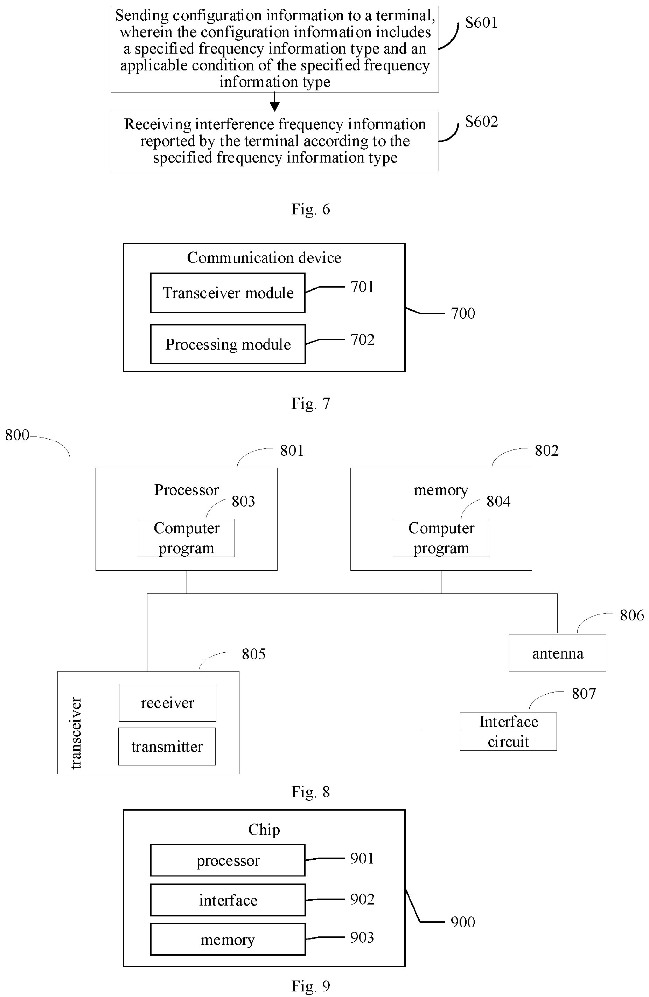

Please refer to Fig. 6, which is a schematic flowchart of a method for reporting interference frequency information provided in an embodiment of the present disclosure. The method for reporting interference frequency information is performed by a network device, and the method includes but is not limited to the following steps.

S601, configuration information is sent to a terminal, wherein the configuration information is used to configure a specified frequency information type and/or an applicable condition of the specified frequency information type to the terminal.

For a specific introduction to the specified frequency information type, please refer to relevant content recorded in the above embodiments, which will not be repeated here.

In an embodiment, the applicable condition of the specified frequency information type includes at least one of:
an applicable radio access technology type;
an applicable frequency point;
an applicable frequency point type;
an applicable cell;
an applicable cell group;
an applicable BWP;
an applicable physical resource block; or
an applicable frequency interference type.

For a specific introduction to the application condition of the specified frequency information type, please refer to relevant content recorded in the above embodiment, which is not repeated here.

S602, interference frequency information reported by the terminal according to the specified frequency information type is received.

As the applicable conditions for different frequency information types can also vary, after determining the specified frequency information type and the applicable condition for the specified frequency information type, the interference frequency information that can be reported to the network device is determined and reported to the network device. That is to say, by specifying the frequency information type, the interference frequency information reported by the terminal to the network device needs to be within the applicable condition of the specified frequency information type.

In an embodiment, the network device may receive part or all of the interference frequency information reported by the terminal based on the specified frequency information type that meets the applicable condition of the specified frequency information type.

In an embodiment, the network device may receive an uplink carrier frequency combination reported by the terminal based on the specified frequency information type, or the network device may receive a single carrier interference frequency reported by the terminal based on a specified frequency information type.

In embodiments of the present disclosure, the network device can receive the interference frequency information reported by the terminal through the specified frequency information type, which can enable the terminal and the network device to maintain consistency in the frequency information type used for reporting the interference frequency information. Due to the fact that the finer granularity of frequency information, the more signaling loss, in order to balance the signaling loss and the precision of frequency interference control, under different interference control requirements, different frequency information types can be indicated to the terminal for reporting the interference frequency information, achieving a compromise between signaling loss and precise interference control. Further, by setting the applicable condition for the specified frequency information type, the accuracy of the reported interference frequency information can be ensured, and the reported amount of irrelevant frequency information can be excluded.

In the above embodiments provided by the present application, the methods provided by the embodiments are introduced from the perspectives of the network device and the terminal, respectively. In order to achieve the various functions in the methods provided in the embodiments of the present disclosure, the network device and the first terminal may include hardware structures and software modules, which can be implemented in the form of hardware structures, software modules, or a combination of hardware structures and software modules. One of the above functions can be executed in the form of hardware structure, software module, or a combination of hardware structure and software module.

Please refer to Fig. 7, which is a block diagram of a communication device 700 provided in an embodiment of the present disclosure. The communication device shown in Fig. 7 may include a transceiver module 701 and a processing module 702. The transceiver module 701 may include a sending module and/or a receiving module. The sending module is used to implement the sending function, and the receiving module is used to implement the receiving function. The transceiver module 701 may implement the sending function and/or the receiving function.

The communication device 700 can be a terminal, a device within a terminal, or a device that can be used in conjunction with the terminal. Alternatively, the communication device 700 can be a network device, a device within a network device, or a device that can be used in conjunction with the network device.

The communication device 700 may be the terminal as described in the above embodiments.

The transceiver module 701 is configured to report interference frequency information to a network device according to a specified frequency information type.

In an embodiment, the transceiver module 701 is further configured to report the interference frequency information to the network device according to the specified frequency information type and an applicable condition of the specified frequency information type.

In an embodiment, the transceiver module 701 is further configured to report part or all of the interference frequency information that meets the applicable condition to the network device based on the specified frequency information type.

In an embodiment, the processing module 702 is further configured to determine the specified frequency information type and/or an applicable condition of the specified frequency information type according to network configuration or a protocol agreement.

In an embodiment, the specified frequency information type includes at least one of:
a frequency point and a bandwidth;
a starting frequency point and an ending frequency point;
bandwidth part information;
resource block information; or
a measurement object.
In an embodiment,

In an embodiment, the specified frequency information type is the frequency point, and the interference frequency information includes at least one of the starting frequency point or the ending frequency point;

the specified frequency information type is the bandwidth, and the interference frequency information includes at least one of a frequency bandwidth identifier, a BWP identifier, a cell identifier, or a cell group identifier.

In an embodiment, the starting frequency point and the ending frequency point are absolute radio frequency channel numbers.

In an embodiment, the specified frequency information type is the BWP information, and the interference frequency information includes any of all configured BWP information and specified BWP information;

wherein, the specified BWP information includes at least one of a BWP identifier, a cell identifier, or a cell group identifier.

In an embodiment, the specified frequency information type is the resource block information, and the interference frequency information includes at least one of numbers of resource blocks or resource block groups, a number of a starting resource block or of a starting resource block group, or a numeric count of resource blocks or resource block groups.

In an embodiment, the applicable condition of the specified frequency information type includes at least one of:
an applicable radio access technology type;
an applicable frequency point;
an applicable frequency point type;
an applicable cell;
an applicable cell group;
an applicable BWP;
an applicable physical resource block; or
an applicable frequency interference type.

In an embodiment, the applicable frequency point type includes at least one of a service frequency point or a non-service frequency point.

In an embodiment, the frequency interference type includes at least one of an uplink carrier aggregation frequency combination or a single carrier interference frequency.

The communication device 700 may be the network device as described in the above embodiments.

The transceiver module 701 is configured to receive interference frequency information reported by a terminal according to a specified frequency information type.

In an embodiment, the transceiver module 701 is further configured to send configuration information to the terminal, wherein the configuration information is used to configure the specified frequency information type and/or an applicable condition of the specified frequency information type to the terminal.

In an embodiment, the transceiver module 701 is further configured to receive part or all of the interference frequency information that meets the applicable condition reported by the terminal to the network device based on the specified frequency information type.

In an embodiment, the specified frequency information type includes at least one of:
a frequency point and a bandwidth;
a starting frequency point and an ending frequency point;
bandwidth part information;
resource block information; or
a measurement object.

In an embodiment, the specified frequency information type is the frequency point, and the interference frequency information includes at least one of the starting frequency point or the ending frequency point; the specified frequency information type is the bandwidth, and the interference frequency information includes at least one of a frequency bandwidth identifier, a BWP identifier, a cell identifier, or a cell group identifier.

In an embodiment, the starting frequency point and the ending frequency point are absolute radio frequency channel numbers.

In an embodiment, the specified frequency information type is the BWP information, and the interference frequency information includes any of all configured BWP information and specified BWP information;

wherein, the specified BWP information includes at least one of a BWP identifier, a cell identifier, or a cell group identifier.

In an embodiment, the specified frequency information type is the resource block information, and the interference frequency information includes at least one of numbers of resource blocks or resource block groups, a number of a starting resource block or of a starting resource block group, or a numeric count of resource blocks or resource block groups.

In an embodiment, the applicable condition of the specified frequency information type includes at least one of:
an applicable radio access technology type;
an applicable frequency point;
an applicable frequency point type;
an applicable cell;
an applicable cell group;
an applicable BWP;
an applicable physical resource block; or
an applicable frequency interference type.

In an embodiment, the applicable frequency point type includes at least one of a service frequency point or a non-service frequency point.

In an embodiment, the frequency interference type includes at least one of an uplink carrier aggregation frequency combination or a single carrier interference frequency.

In embodiments of the present disclosure, by specifying the frequency information type for reporting the interference frequency information, the terminal and the network device can maintain consistency in the frequency information type used for reporting interference frequency information. Due to the fact that the finer granularity of frequency information, the more signaling loss, in order to balance the signaling loss and the precision of frequency interference control, under different interference control requirements, different frequency information types can be indicated to the terminal for reporting the interference frequency information, achieving a compromise between signaling loss and precise interference control. Further, by setting the applicable condition of the specified frequency information type, the accuracy of the reported interference frequency information is ensured, and the reported amount of irrelevant frequency information can be excluded.

Please refer to Fig. 8, which is a block diagram of another communication device 800 provided in an embodiment of the present disclosure. The communication device 800 may be a network device, a terminal (such as the first terminal in the aforementioned method embodiments), a chip, chip system, or processor that supports the network device to implement the above method, or a chip, chip system, or processor that supports the terminal to implement the above method. This device can be used to implement the methods described in the above method embodiments, which can be referred to in the description of the above method embodiments.

The communication device 800 may include one or more processors 801. The processor 801 may be a general-purpose processor or a dedicated processor, etc. For example, it may be a baseband processor or a central processor. The baseband processor can be used to process communication protocols and communication data, while the central processor can be used to control communication devices (such as base stations, baseband chips, terminals, terminal chips, DU or CU, etc.), execute computer programs, and process data from computer programs.

Optionally, the communication device 800 may also include one or more memories 802, on which computer programs 804 may be stored. The processor 801 executes the computer programs 804 to enable the communication device 800 to perform the methods described in the above method embodiments. Optionally, the memory 802 can also store data. The communication device 800 and the memory 802 can be set separately or integrated together.

Optionally, the communication device 800 may also include a transceiver 805 and an antenna 806. The transceiver 805 can be referred to as a transceiver unit, transceiver machine, or transceiver circuit, etc., used to achieve transceiver functions. The transceiver 805 can include a receiver and a transmitter, where the receiver can be referred to as a receiver unit or receiving circuit, etc., used to achieve the receiving function; the transmitter can be referred to as a transmitter unit or a transmission circuit, etc., used to implement the transmission function.

Optionally, the communication device 800 may also include one or more interface circuits 808. The interface circuit 808 is used to receive code instructions and transmit them to the processor 801. The processor 801 executes the code instructions to cause the communication device 800 to perform the method described in the above method embodiments.

The communication device 800 is the terminal, and can be configured to implement the functions of the terminal in the above embodiments.

The communication device 1000 is the network device, and can be configured to implement the functions of the network device in the above embodiments.

In one implementation, the processor 801 may include a transceiver for implementing receiving and transmitting functions. For example, the transceiver can be a transceiver circuit, or an interface, or an interface circuit. The transceiver circuit, interface, or interface circuit used to implement the receiving and sending functions can be separate or integrated together. The above-mentioned transceiver circuit, interface or interface circuit can be used for reading and writing code/data, or the above-mentioned transceiver circuit, interface or interface circuit can be used for signal transmission or transfer.

In one implementation, the processor 801 may store a computer program 803 that runs on the processor 801 and enables the communication device 800 to perform the method described in the above method embodiments. The computer program 803 may be fixed in the processor 801, in which case the processor 801 may be implemented by hardware.

In one implementation, the communication device 800 may include a circuit that can perform the functions of sending, receiving, or communicating as described in the aforementioned method embodiments. The processor and transceiver described in this disclosure can be implemented on integrated circuits (ICs), analog ICs, radio frequency integrated circuits (RFICs), mixed signal ICs, application specific integrated circuits (ASICs), printed circuit boards (PCBs), electronic devices, etc. The processor and transceiver can also be manufactured using various IC process technologies, such as complementary metal oxide semiconductor (CMOS), n-type metal oxide semiconductor (NMOS), positive channel metal oxide semiconductor (PMOS), bipolar junction transistor (BJT), bipolar CMOS, silicon germanium (SiGe), gallium arsenide (GaAs), etc.

The communication device described in the above embodiments may be the network device, or may be the terminal (for example, the first terminal in the above method embodiments), but the scope of the communication device described in this disclosure is not limited to this. The structure of the communication device can be not limited by Fig. 8. The communication device may be a standalone device or a part of a larger device. For example, the communication device may be:
(1) Independent integrated circuit IC, or chip, or chip system or subsystem;
(2) A set of one or more ICs, optionally including storage components for storing data and computer programs;
(3) ASIC, such as modems;
(4) Modules that can be embedded in other devices;
(5) Receiver, terminal, intelligent terminal, cellular phone, wireless device, handheld device, mobile unit, vehicle mounted device, network device, cloud device, artificial intelligence device, etc;
(6) Others and so on.

For the communication device that can be a chip or chip system, please refer to the block diagram of the chip shown in Fig. 9. The chip 900 shown in Fig. 9 includes processors 901 and interfaces 902. The number of processors 901 can be one or more, and the number of interfaces 902 can be multiple.

For the case where the chip is configured to implement the functions of the terminal in embodiments of the present disclosure:
the interface 902 is configured to report interference frequency information to a network device according to a specified frequency information type.

In an embodiment, the interface 901 is further configured to report the interference frequency information to the network device according to the specified frequency information type and an applicable condition of the specified frequency information type.

In an embodiment, the interface 902 is further configured to report part or all of the interference frequency information that meets the applicable condition to the network device based on the specified frequency information type.

In an embodiment, the processor 901 is further configured to determine the specified frequency information type and/or an applicable condition of the specified frequency information type according to network configuration or a protocol agreement.

In an embodiment, the specified frequency information type is the frequency point, and the interference frequency information includes at least one of the starting frequency point or the ending frequency point;
the specified frequency information type is the bandwidth, and the interference frequency information includes at least one of a frequency bandwidth identifier, a BWP identifier, a cell identifier, or a cell group identifier.

In an embodiment, the starting frequency point and the ending frequency point are absolute radio frequency channel numbers.

In an embodiment, the specified frequency information type is the BWP information, and the interference frequency information includes any of all configured BWP information and specified BWP information;
wherein, the specified BWP information includes at least one of a BWP identifier, a cell identifier, or a cell group identifier.

In an embodiment, the specified frequency information type is the resource block information, and the interference frequency information includes at least one of numbers of resource blocks or resource block groups, a number of a starting resource block or of a starting resource block group, or a numeric count of resource blocks or resource block groups.

In an embodiment, the applicable condition of the specified frequency information type includes at least one of:
an applicable radio access technology type;
an applicable frequency point;
an applicable frequency point type;
an applicable cell;
an applicable cell group;
an applicable BWP;
an applicable physical resource block; or
an applicable frequency interference type.

In an embodiment, the applicable frequency point type includes at least one of a service frequency point or a non-service frequency point.

In an embodiment, the frequency interference type includes at least one of an uplink carrier aggregation frequency combination or a single carrier interference frequency.

The communication device 600 may be the network device in the above embodiments.

The interface 902 is configured to receive interference frequency information reported by a terminal according to a specified frequency information type.

In an embodiment, the interface 902 is further configured to send configuration information to the terminal, wherein the configuration information is used to configure the specified frequency information type and/or an applicable condition of the specified frequency information type to the terminal.

In an embodiment, the interface 902 is further configured to receive part or all of the interference frequency information that meets the applicable condition reported by the terminal to the network device based on the specified frequency information type.

In an embodiment, the specified frequency information type is the frequency point, and the interference frequency information includes at least one of the starting frequency point or the ending frequency point;
the specified frequency information type is the bandwidth, and the interference frequency information includes at least one of a frequency bandwidth identifier, a BWP identifier, a cell identifier, or a cell group identifier.

In an embodiment, the starting frequency point and the ending frequency point are absolute radio frequency channel numbers.

In an embodiment, the specified frequency information type is the BWP information, and the interference frequency information includes any of all configured BWP information and specified BWP information;
wherein, the specified BWP information includes at least one of a BWP identifier, a cell identifier, or a cell group identifier.

In an embodiment, the specified frequency information type is the resource block information, and the interference frequency information includes at least one of numbers of resource blocks or resource block groups, a number of a starting resource block or of a starting resource block group, or a numeric count of resource blocks or resource block groups.

In an embodiment, the applicable condition of the specified frequency information type includes at least one of:
an applicable radio access technology type;
an applicable frequency point;
an applicable frequency point type;
an applicable cell;
an applicable cell group;
an applicable BWP;
an applicable physical resource block; or
an applicable frequency interference type.

In an embodiment, the applicable frequency point type includes at least one of a service frequency point or a non-service frequency point.

In an embodiment, the frequency interference type includes at least one of an uplink carrier aggregation frequency combination or a single carrier interference frequency.

The chip 900 also includes a memory 903 for storing necessary computer programs and data.

In embodiments of the present disclosure, by specifying the frequency information type for reporting the interference frequency information, the terminal and the network device can maintain consistency in the frequency information type used for reporting interference frequency information. Due to the fact that the finer granularity of frequency information, the more signaling loss, in order to balance the signaling loss and the precision of frequency interference control, under different interference control requirements, different frequency information types can be indicated to the terminal for reporting the interference frequency information, achieving a compromise between signaling loss and precise interference control. Further, by setting the applicable condition of the specified frequency information type, the accuracy of the reported interference frequency information is ensured, and the reported amount of irrelevant frequency information can be excluded.

Technicians in this field can also understand that various illustrative logical blocks and steps listed in the embodiments of the present disclosure can be implemented through electronic hardware, computer software, or a combination of both. Whether such functionality is implemented through hardware or software depends on the specific application and the design requirements of the entire system. Technicians in this field can use various methods to implement the described functions for each specific application, but such implementation should not be understood as exceeding the scope of protection of the disclosed embodiments.

The present disclosure also provides a communication system. The system includes a communication device as a terminal and a communication device as a network device in the aforementioned embodiment of Fig. 7, or alternatively, the system includes a communication device as a terminal and a communication device as a network device in the aforementioned embodiment of Fig. 8.

The present disclosure also provides a readable storage medium, storing instructions that, when executed by a computer, implement the functions of any of the method embodiments described above.

The present disclosure also provides a computer program product that, when executed by a computer, implements the functions of any of the method embodiments described above.

In the above embodiments, it can be fully or partially implemented through software, hardware, firmware, or any combination thereof. When implemented using software, it can be fully or partially implemented in the form of a computer program product. The computer program product includes one or more computer programs. When loading and executing the computer program on a computer, all or part of the process or function described in embodiments of the present disclosure is generated. The computer may be a general-purpose computer, a specialized computer, a computer network, or other programmable device. The computer program can be stored in a computer-readable storage medium or transmitted from one computer-readable storage medium to another. For example, the computer program can be transmitted from a website site, computer, server, or data center to another website site, computer, server, or data center via wired (such as coaxial cable, fiber optic, digital subscriber line (DSL)) or wireless (such as infrared, wireless, microwave, etc.) means. The computer-readable storage medium can be any available medium that a computer can access, or a data storage device such as a server or data center that integrates one or more available media. The available media can be magnetic media (such as floppy disks, hard disks, magnetic tapes), optical media (such as high-density digital video discs (DVDs)), or semiconductor media (such as solid state disks (SSDs)).

Those skilled in the art can understand that the first, second, and other numerical numbers mentioned in this disclosure are only for the convenience of description and are not intended to limit the scope of the disclosed embodiments, but also indicate the order of occurrence.

"At least one" in the present disclosure can also be described as one or more, and "multiple" \can be two, three, four, or more, without limitation in this disclosure. In embodiments of the present disclosure, for a type of technical feature, the technical features in the type of technical feature are distinguished by "first", "second", "third", "A", "B", "C", and "D", etc. The technical features described by "first", "second", "third", "A", "B", "C", and "D" have no order of priority or size.

The correspondence relationships shown in each table in this disclosure can be configured or predefined. The values of the information in each table are only examples and can be configured as other values, which are not limited by this disclosure. When configuring the correspondence between information and various parameters, it is not necessarily required to configure all the correspondence relationships shown in each table. For example, in the table disclosed herein, the correspondence relationships shown in certain rows may not be configured. For another example, appropriate deformation adjustments can be made based on the above table, such as splitting, merging, and so on. The titles in the above tables indicate that the names of the parameters can also be other names that the communication device can understand, and the values or representations of the parameters can also be other values or representations that the communication device can understand. The above tables can also be implemented using other data structures, such as arrays, queues, containers, stacks, linear tables, pointers, linked lists, trees, graphs, structures, classes, heaps, hash tables, etc.

The predefined in this disclosure can be understood as defined, defined in adventure, stored, prestored, pre-negotiated, pre-configured, solidified, or pre-fired. Those skilled in the art will recognize that the units and algorithm steps described in the embodiments of the present disclosure can be implemented using electronic hardware, or a combination of computer software and electronic hardware. Whether these functions are executed in hardware or software depends on the specific application and design constraints of the technical solution. Professional technicians can use different methods to achieve the described functionality for each specific application, but such implementation should not be considered beyond the scope of this disclosure.

Technicians in the relevant field can clearly understand that, for the convenience and conciseness of description, the specific working process of the system, device, and unit described above can refer to the corresponding process in the aforementioned method embodiments, which will not be repeated here.

The above is only a specific implementation of the present disclosure, but the scope of protection of the present disclosure is not limited to this. Any skilled person familiar with the technical field can easily think of changes or replacements within the technical scope disclosed in the present disclosure, which should be included in the scope of protection of the present disclosure. Therefore, the scope of protection of this disclosure should be based on the scope of protection of the claims.

## Claims

1. A method for reporting interference frequency information, performed by a terminal, comprising:
reporting interference frequency information to a network device according to a specified frequency information type.

2. The method of claim 1, wherein reporting the interference frequency information to the network device according to the specified frequency information type comprises:
reporting the interference frequency information to the network device according to the specified frequency information type and an applicable condition of the specified frequency information type.

3. The method of claim 2, further comprising:
reporting part or all of the interference frequency information that meets the applicable condition to the network device based on the specified frequency information type.

4. The method of claim 1, further comprising:
determining the specified frequency information type and/or an applicable condition of the specified frequency information type according to network configuration or a protocol agreement.

5. The method of any of claims 1-4, wherein the specified frequency information type comprises at least one of:
a frequency point and a bandwidth;
a starting frequency point and an ending frequency point;
bandwidth part information;
resource block information; or
a measurement object.

6. The method of claim 5, wherein the specified frequency information type is the frequency point, and the interference frequency information comprises at least one of the starting frequency point or the ending frequency point;
the specified frequency information type is the bandwidth, and the interference frequency information comprises at least one of a frequency bandwidth identifier, a BWP identifier, a cell identifier, or a cell group identifier.

7. The method of claim 5, wherein the starting frequency point and the ending frequency point are absolute radio frequency channel numbers.

8. The method of claim 5, wherein the specified frequency information type is the BWP information, and the interference frequency information comprises any of all configured BWP information and specified BWP information;
wherein, the specified BWP information comprises at least one of a BWP identifier, a cell identifier, or a cell group identifier.

9. The method of claim 5, wherein the specified frequency information type is the resource block information, and the interference frequency information comprises at least one of numbers of resource blocks or resource block groups, a number of a starting resource block or of a starting resource block group, or a numeric count of resource blocks or resource block groups.

10. The method of any of claims 2-4, wherein the applicable condition of the specified frequency information type comprises at least one of:
an applicable radio access technology type;
an applicable frequency point;
an applicable frequency point type;
an applicable cell;
an applicable cell group;
an applicable BWP;
an applicable physical resource block; or
an applicable frequency interference type.

11. The method of claim 10, wherein the applicable frequency point type comprises at least one of a service frequency point or a non-service frequency point.

12. The method of claim 10, wherein the frequency interference type comprises at least one of an uplink carrier aggregation frequency combination or a single carrier interference frequency.

13. A method for reporting interference frequency information, performed by a network device, comprising:
receiving interference frequency information reported by a terminal according to a specified frequency information type.

14. The method of claim 13, further comprising:
sending configuration information to the terminal, wherein the configuration information is used to configure the specified frequency information type and/or an applicable condition of the specified frequency information type to the terminal.

15. The method of claim 13, further comprising:
receiving part or all of the interference frequency information that meets the applicable condition reported by the terminal to the network device based on the specified frequency information type.

16. The method of any of claims 13-15, wherein the specified frequency information type comprises at least one of:
a frequency point and a bandwidth;
a starting frequency point and an ending frequency point;
bandwidth part information;
resource block information; or
a measurement object.

17. The method of claim 16, wherein the specified frequency information type is the frequency point, and the interference frequency information comprises at least one of the starting frequency point or the ending frequency point; the specified frequency information type is the bandwidth, and the interference frequency information comprises at least one of a frequency bandwidth identifier, a BWP identifier, a cell identifier, or a cell group identifier.

18. The method of claim 16, wherein the starting frequency point and the ending frequency point are absolute radio frequency channel numbers.

19. The method of claim 16, wherein the specified frequency information type is the BWP information, and the interference frequency information comprises any of all configured BWP information and specified BWP information;
wherein, the specified BWP information comprises at least one of a BWP identifier, a cell identifier, or a cell group identifier.

20. The method of claim 16, wherein the specified frequency information type is the resource block information, and the interference frequency information comprises at least one of numbers of resource blocks or resource block groups, a number of a starting resource block or of a starting resource block group, or a numeric count of resource blocks or resource block groups.

21. The method of claim 13 or 14, wherein the applicable condition of the specified frequency information type comprises at least one of:
an applicable radio access technology type;
an applicable frequency point;
an applicable frequency point type;
an applicable cell;
an applicable cell group;
an applicable BWP;
an applicable physical resource block; or
an applicable frequency interference type.

22. The method of claim 21, wherein the applicable frequency point type comprises at least one of a service frequency point or a non-service frequency point.

23. The method of claim 21, wherein the frequency interference type comprises at least one of an uplink carrier aggregation frequency combination or a single carrier interference frequency.

24. A communication device, comprising:
a transceiver module, configured to report interference frequency information to a network device according to a specified frequency information type.

25. A communication device, comprising:
a transceiver module, configured to receive interference frequency information reported by a terminal according to a specified frequency information type.

26. A communication device, comprising a processor and a memory, wherein the memory stores a computer program, and the processor is configured to execute the computer program stored in the memory, to cause the device to implement the method of any of claims 1-12.

27. A communication device, comprising a processor and a memory, wherein the memory stores a computer program, and the processor is configured to execute the computer program stored in the memory, to cause the device to implement the method of any of claims 13-23.

28. A communication device, comprising a processor and an interface circuit, wherein
the interface circuit is configured to receive code instructions and transmit the code instructions to the processor; the processor is configured to run the code instructions to implement the method of any of claims 1-12.

29. A communication device, comprising a processor and an interface circuit, wherein
the interface circuit is configured to receive code instructions and transmit the code instructions to the processor; the processor is configured to run the code instructions to implement the method of any of claims 13-23.

30. A computer readable storage medium, configured to store instructions that, when executed, enable the method of any one of claims 1 to 12 to be implemented.

31. A computer readable storage medium, configured to store instructions that, when executed, enable the method of any one of claims 13 to 23 to be implemented.
